# EUROPÄISCHE PATENTSCHRIFT

(11) **EP 1 127 655 B1**
(45) Veröffentlichungstag und Bekanntmachung des Hinweises auf die Patenterteilung: **25.09.2002**
(21) Anmeldenummer: 01101410.7
(22) Anmeldetag: 23.01.2001
(51) Int. Cl.: B23Q 1/00, B23Q 11/00

(54) **Ausblaseinrichtung für eine Mehrfachkupplung**
Blow-out system in a multiple connector
Dispositif de chasse à air comprimé dans une connexion multiple

(30) Priorität: 29.01.2000 DE 20001587 U
(43) Veröffentlichungstag der Anmeldung: 29.08.2001
(73) Patentinhaber: A. Römheld GmbH & Co KG, 35321 Laubach (DE)
(72) Erfinder: Portius, Gerd, 06679 Wuschlaub (DE)
(74) Vertreter: Bischof, Hans-Jochen, Dipl.-Ing.

(56) Entgegenhaltungen:
- EP-A- 0 849 034
- JP-A- 62 140 737
- US-A- 4 855 558
- US-A- 4 915 553
- US-A- 5 133 629
- US-A- 5 906 378

## Beschreibung

Die Erfindung bezieht sich auf eine Mehrfachkupplung mit einer Ausblaseinrichtung mittels derer die bei einem Arbeitsvorgang anfallenden Verunreinigungen beseitigt werden.

Mehrfachkupplungen werden auf Maschinentischen und in Bearbeitungszentren eingesetzt. Sie dienen zur Leitungsverbindung zwischen Maschinentisch und Palette sowie zwischen Maschinentisch und / oder Palette und Vorrichtungen, wie Formen, Werkzeuge u. dergl. Die zugeführten Medien können Drucköl, Druckluft oder auch Vakuum sein. Mehrfachkupplungen haben den Vorteil kleinster Einbauverhältnisse, so daß sich mehrere Kupplungsstellen auf kleinsten Raum realisieren lassen.

Die Mehrfachkupplungen unterliegen während der Bearbeitungsvorgänge einer starken Verschmutzungsgefahr durch Späne, Öl u. dergl. Das bedingt, daß die Kupplungen nach dem Entkuppeln von allen Verunreinigungen befreit werden müssen, bis sie wieder einkuppelbar sind. Andernfalls besteht die Gefahr, daß durch Verunreinigungen keine exakte Ankuppelung gewährleistet ist, wodurch die Medienübertragung gestört wird.

Es ist bekannt, die Mehrfachkupplungen mit einer Ausblaseinrichtung zu versehen, die immer dann in Aktion tritt, wenn das Element entkuppelt wird. Die Ausblaseinrichtung lässt Druckluft über die Kuppelelemente streichen und befreit diese von unerwünschten Schmutzpartikeln. Diese Ausblaseinrichtungen sind mit einer zylindrischen Düse bestückt, die parallel zur Fläche der Kupplungselemente einen Luftstrom ausbläst. Somit ist die Wirkung des Luftstromes nicht optimal, so daß noch Schmutzpartikel verbleiben, die auf eine andere Art beseitigt werden müssen.

Hier setzt die Erfindung ein. Deren Aufgabe besteht darin, die Luftdüse der Ausblaseinrichtung so zu gestalten, daß der volle Luftstrom die zu reinigenden Kupplungsflächen frei bläst.

Die Lösung der Erfindung ist in den Merkmalen der Ansprüche enthalten.

In den Zeichnungen ist die Ausführung der Einrichtung näher dargestellt.
Fig. 1 zeigt einen Querschnitt durch ein Kupplungselement
Fig. 2 zeigt eine Draufsicht auf das Kupplungselement.

In dem Gehäuse 1 sind drei Kupplungselemente 2 eingebracht. Ferner sind drei Positionsbefestigungen 3 mit ihren Positionsstiften 4 vorgesehen. Die Positionsbefestigungen 3 sorgen dafür, daß die Mehrfachkupplungen positioniert in den Maschinentisch, bzw. in die Palette einbringbar sind. Im eingesetzten Zustand schliesst die Mehrfachkupplung bündig mit der Oberfläche des Maschinentisches oder der Palette ab.

in der Mitte der Mehrfachkupplung ist eine Ausblaseinrichtung 5 in einer im Gehäuse 1 eingebrachten Aussparung 13 eingelassen. Diese Aussparung 13 wird im unteren Bereich durch den Gehäuseboden 10 abgeschlossen. Ferner ist die Aussparung 13 im unteren Bereich erweitert. Die Ausblaseinrichtung besteht aus einem Rundkörper 8 der innen einen Hohlraum 9 in Form einer Sackbohrung aufweist Der Rundkörper 8 ist in seinem unteren Bereich mit einer Verdickung 12 versehen. Diese Verdickung 12 greift in die Erweiterung der Aussparung 13 ein, womit der Hub des Rundkörpers 8 bestimmt ist. In dem Hohlraum 9 ist eine Druckfeder 7 eingesetzt, die sich einmal am Ende der Sackbohrung im Rundkörper und zum anderen am Gehäuseboden 10 abstützt.

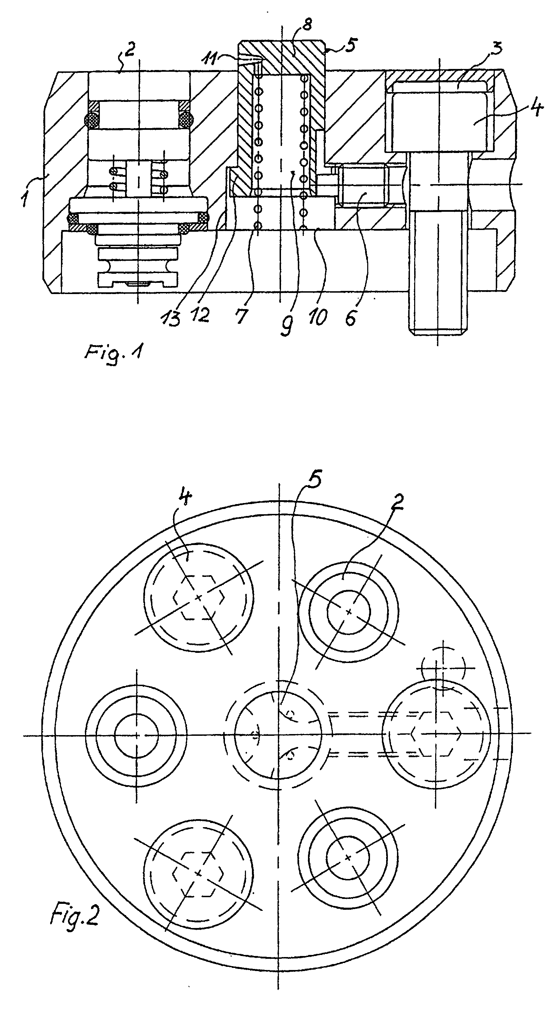

Im entkuppelten Zustand ist die Ausblaseinrichtung 5, wie in Fig. 1 gezeigt, ausgefahren und ragt ein Stück aus dem Gehäuse raus. Im eingefahrenen Zustand schliesst die Ausblaseinrichtung 5 mit der Oberfläche des Gehäuses 1 bündig ab. Der Rundkürper 9 ist mit drei Luftdruckdüsen 11 versehen, die durch seine Wandung hindurch in den Hohlraum 9 führen. Die Luftdruckdüsen 11 sind so eingebracht, daß sie exakt auf die Kupplungselemente 2 gerichtet sind. Der Hohlraum 9 wird mit Druckluft gefüllt, die durch die Düsen austreten kann. Um einen maximalen Luftstrom über die Kupplungselemente zu leiten, sind die Luftdruckdüsen 11 trichterförmig ausgebildet, wobei der Trichter so in die Wandung des Rundkörpers 8 eingebracht ist, daß er sich nach innen zum Hohlraum hin verjüngt. Hierbei kann der Trichter auch in der Wandung des Rundkörpers enden und durch einen Querkanal mit dem Hohlraum verbunden sein. Durch diese Trichterform wird ein breiter Luftstrom erzeugt, der darüber hinaus noch verwirbelt und damit noch die Wirkung verstärkt. Einen noch grösseren Effekt erzielt man dadurch, daß die durch die trichterförmige Druckluftdüse gedachte Mittellinie unter einem vorgegebenen Winkel auf die Kupplungselemente 2 gerichtet ist, d.h., daß der aus der Luftdruckdüse austretende Luftstrom unter einem Winkel zum Kupplungselement hin austritt.

Die Ausblaseinrichtung 5 ist gegen Verdrehung gesichert, und zwar durch das Sicherungselement 6. Dieses kann mittels einer Bohrung im Rundkörper oder durch Abflachung des Rundkörpers an einer Stelle geschehen.

Ist die Mehrfachkupplung in den Maschinentisch oder in die Palette eingesetzt, so befindet sich die Ausblaseinrichtung 5 im Gehäuse 1 und schliesst bündig mit diesem ab. Die Luftdruckdüse 11 befindet sich innerhalb der GehäuseAussparung 13, so daß keine Luft ausströmen kann. Wird dagegen entkuppelt, so wird infolge der Wirkung durch die Druckfeder 7 der Rundkörper 8 aus dem Gehäuse herausgedrückt, bis zum Anschlag seiner Verdickung 12 am Absatz der Gehäuse- Aussparung 13. Damit wird die Luftdruckdüse 11 frei gegeben und es tritt ein Luftstrom aus, der über die Kupplungselemente 2 gerichtet ist.

## Patentansprüche

1. Mehrfachkupplung mit einer Ausblaseinrichtung, bei der in einem Gehäuse ein im Inneren hohler Rundkörper eingelassen ist, der mit Druckluftdüsen bestückt ist durch die im entkuppelten Zustand aus dem hohlen Rundkörper (8) heraus, ein Luftstrom austritt, der über die im Gehäuse eingebrachten Kupplungselemente geführt die vorhandene Schmutzpartikel entfernt, **dadurch gekennzeichnet, daß** die Druckluftdüsen (11) trichterförmig ausgebildet sind und der Trichter sich nach innen zum Hohlraum hin verjüngt.

2. Mehrfachkupplung nach Anspruch 1, **dadurch gekennzeichnet, daß** die durch die trichterförmige Druckluftdüse (11) gedachte Mittellinie unter einem vorgegebenen Winkel auf die Kupplungselemente (2) gerichtet ist.

## Claims

1. Multiple clutch including a venting means, wherein a round body having a hollow interior is embedded in a housing and is equipped with compressed-air nozzles through which an air flow is discharged out of said hollow round body (8) in the state of clutch disengagement, which air flow, guided via the clutch elements inserted in said housing, removes the dirt particles existing there, **characterised in that** said compressed-air nozzles (11) have a funnel-shaped configuration and that the funnel tapers inwardly towards said hollow space.

2. Multiple clutch according to Claim 1, **characterised in that** the centre line imagined through said funnel-shaped compressed-air nozzle (11) is oriented at a predetermined angle relative to said clutch elements (2).

## Revendications

1. Embrayage multiple comprenant un moyen de purge, dans lequel un corps rond à un espace intérieur creux, est noyé dans un carter, en étant muni des tuyères de l'air comprimé, à travers desquelles un courant d'air est déchargé en dehors dudit corps rond creux (8) en état de débrayage, ce courant d'air, guidé via les éléments d'embrayage montés lesdits éléments de débrayage, enlève les particules de crasse y présentes, **caractérisé en ce que** lesdites tuyères d'air comprimé (11) ont une configuration en entonnoir, et **en ce que** ledit entonnoir se réduit en cône vers ledit espace creux.

2. Embrayage multiple selon la revendication 1, **caractérisé en ce que** la ligne médiane imaginée, qui passe par ladite tuyère d'air comprimé en entonnoir (11) est orientée à an angle relatif auxdites éléments d'embrayage (2).
